# EUROPÄISCHE PATENTSCHRIFT

(11) **EP 0 640 370 B1**
(45) Veröffentlichungstag und Bekanntmachung des Hinweises auf die Patenterteilung: **11.11.1998**
(21) Anmeldenummer: 94113084.1
(22) Anmeldetag: 22.08.1994
(51) Int. Cl.: B01D 29/37, B01D 29/64, B01D 29/01, E03F 5/14

(54) **Vorrichtung zum Austragen von festen Bestandteilen aus einem Fluid**
Device for discharging solid compounds from a fluid
Dispositif pour décharger des composants solides d'un fluide

(30) Priorität: 24.08.1993 DE 4328476
(43) Veröffentlichungstag der Anmeldung: 01.03.1995
(73) Patentinhaber: Rudolf Bischof GmbH, D-85386 Eching (DE)
(72) Erfinder: Bischof, Rudolf, D-85386 Eching (DE)
(74) Vertreter: Flügel, Otto, Dipl.-Ing.

(56) Entgegenhaltungen:
- EP-A- 0 288 105
- WO-A-91/13672
- DE-A- 4 222 128

## Beschreibung

Die Erfindung betrifft eine Vorrichtung zum Austragen von festen Bestandteilen aus einer in einem Gerinne fließenden Flüssigkeit, mit einem als Förderrinne ausgebildeten Fördermittel, welches unter einem Winkel < 90° zum Gerinne geneigt angeordnet ist und eine drehend angetriebene Förderschnecke oder Förderwendel hat, wobei das Fördermittel an einem Ende einen Feststoffaustrag und am gegenüberliegenden Ende eine zumindest in Teilflächen angeordnete Siebfläche aufweist, in der die festen Bestandteile aus der Flüssigkeit heraussiebbar und über die Förderschnecke oder die Förderwendel in Achsrichtung des Fördermittels zum Feststoffaustrag hin austragbar sind.

Derartige Vorrichtungen sind aus dem Stand der Technik bekannt. Beispielsweise werden derartige Vorrichtungen angeboten, die aus einer Förderrinne und einem Förderrohr bestehen, die koaxial hintereinander angeordnet sind und in denen eine Förderwendel drehend angetrieben ist. Die Förderrinne dieser vorbekannte Vorrichtung besteht aus einem Siebblech, das im Querschnitt halbkreisförmig gebogen ausgebildet ist. In dem Siebblech ist die Wendel derart angeordnet, daß auf dem Siebblech abgelagerte feste Bestandteile von der Wendel in Achsrichtung der Vorrichtung gefördert und an einem Austragsende der Vorrichtung ausgetragen werden. Derartige Vorrichtungen werden in kommunalen und industriellen Kläranlagen, in Papierfabriken, Schlachthöfen, Fisch- und Nahrungsmittelindustriebetrieben, Textilfabriken, Gerbereien, chemischen und pharmazeutischen Industriebetrieben oder Entsorgungsbetrieben verwendet. Die Aufgabe dieser Vorrichtungen besteht darin, eine Abwasserfeinsiebung, eine Schlammsiebung oder eine Schwimmdeckenabsiebung durchzuführen. Mit derartigen Vorrichtungen ist aber auch eine Prozess- und Recyclingwasserreinigung, die Kühlwasseraufbereitung oder Werkstoffrückgewinnung möglich. Hierzu ist die voranstehend beschriebene Vorrichtung in einem im wesentlichen horizontal mit leichtem Gefälle verlaufenden Gerinne angeordnet, wobei die Breite des Gerinnes im wesentlichen mit dem Querschnitt der Förderrinne übereinstimmt. Die Förderrinne reicht hierbei bis auf die Gerinnesohle. Die zu reinigende Flüssigkeit durchströmt die gelochte Siebflache, wobei die im Flüssigkeitsstrom enthaltenen Grob- und Faserstoffe in der Siebzone der Förderrinne zurückgehalten werden. Die Siebzone der Förderrinne wird von der aufliegenden Wendel geräumt. Der durch diese Technik erzielte Auswascheffekt bewirkt, daß beispielsweise organische Bestandteile weitgehend im Wasser enthalten bleiben, wogegen feste Bestandteile in Form von Schadstoffen ausgetragen werden. Die Wendel transportiert das Siebgut durch das Förderrohr bis zu einem Austrag, wo die ausgetragenen festen Bestandteile beispielsweise in Säcke verpackt werden.

Nachteil dieser vorbekannten Vorrichtung ist, daß nur verhältnismäßig geringe Flüssigkeitsmengen erfaßt werden können, da der Durchmesser der Förderrinne in Abhängigkeit der Wendel oder Schnecke aus fertigungstechnischen Gründen nicht beliebig groß gemacht werden kann. Demzufolge ist die wirksame Siebfläche abhängig von der konstruktionsgemäßen Begrenzung des Wendel- oder Schneckendurchmessers. Hierbei hat es sich gezeigt, daß die Toleranzen zwischen der Wendel oder Schnecke und der Förderrinne bzw. dem Förderrohr größer werden, wenn der Durchmesser der Schnecke bzw. der Wendel vergrößert wird. Mit größer werdenden Toleranzen ist die Austragleistung der vorbekannten Vorrichtung jedoch unzureichend. Durch große Toleranzen wird nur ein Bruchteil der festen Bestandteile ausgetragen, wogegen ein großer Teil der festen Bestandteile auf den Siebflächen verbleibt und diese zusetzt, so daß die Vorrichtung abgeschaltet und gereinigt werden muß. Gängige Abmaße einer derartigen Schnecke oder Wendel, bzw. des Gerinnes, in dem diese Bauteile geführt sind, gehen bis zu einem Durchmesser von 600 mm. Durch diese Abmessungen und die Drehgeschwindigkeit der Wendel bzw. der Schnecke ist die Leistungsfähigkeit einer derartigen Vorrichtung begrenzt, so daß nur eine bestimmte Durchflußmenge der Flüssigkeit in einem Zeitintervall bearbeitet werden kann.

Im Stand der Technik sind darüberhinaus derartige Vorrichtungen bekannt, bei denen die effektive Siebfläche dadurch vergrößert wurde, daß die Förderrinne bei gleichbleibendem Durchmesser verlängert wird und somit tiefer in das Gerinne hineinreicht. Bei dieser Ausgestaltung kommt es jedoch zu Problemen durch den Rückstau der Flüssigkeit im Zulaufbereich. Hierbei hat es sich gezeigt, daß die Leistungsgrenze einer derartigen Wendel oder Schnecke darin zu erkennen ist, daß der vom unteren Bereich des Siebes her durch die Wendel bzw. die Schnecke hochgeförderte Feststoff den oberen Bereich des Siebes verstopft, wenn eine zu große Menge Feststoff dieser Vorrichtung zugeführt wurde. Ein Abströmen der Flüssigkeit im oberen Bereich war auf diese Weise nicht mehr zu erzielen, so daß der erwünschte Siebeffekt ausblieb und es zu Aufstauungen der zugeführten Flüssigkeit kam.

Es ist ferner ein Nachteil der vorbekannten Vorrichtungen, daß derartige Vorrichtungen für einen konstanten Flüssigkeitsstrom ausgelegt sind. Bei der Verwendung derartiger Vorrichtungen in Kläranlagen ist aber beispielsweise bei trockenem Wetter oder zu Nachtzeiten die anfallende Flüssigkeitsmenge an Abwasser entsprechend klein. Bei starken Regengüssen oder zu bestimmten Tageszeiten kann die Abwassermenge jedoch bis zum 50-fachen des zuvor erwähnten minimalen Anfalls betragen. Die vorbekannten Vorrichtungen sind jedoch auf einem mittleren Zufluß zwischen diesen beiden zuvor genannten Extremwerten ausgelegt. Bei einer Auslegung derartiger Vorrichtungen an den Höchstbedarf, wonach die Größe des Gerinnes und der Wendel bzw. der Schnecke entsprechend ausgelegt wird, tritt der Effekt auf, daß bei wenig Abwasserzuflauf eine nur geringe Strömungsgeschwindigkeit vorhanden ist, so daß sich die Feststoffe am Gerinneboden absetzen und der erstrebte Reinigungseffekt durch die Schnecke bzw. Wendel nicht erreicht werden kann. Im Gerinne bilden sich dann Feststoffablagerungen, die den Strömungsquerschnitt des Gerinnes verringern und die zu Betriebsstörungen der eingesetzten Geräte führen können.

Ausgehend von diesem Stand der Technik liegt der Erfindung die **Aufgabe** zugrunde, angesichts der vorstehenden Umstände und Nachteile eine gattungsgemäße Vorrichtung zu schaffen, die insbesondere einen plötzlich erhöhten Flüssigkeitsanfall verarbeiten kann, ohne daß die vorhandenen Siebeinrichtungen verstopfen oder überschüssige Flüssigkeit in ein Notgerinne geleitet werden muß.

Die **Lösung** dieser Aufgabenstellung sieht bei einer gattungsgemäßen Vorrichtung vor, daß das Fördermittel zwischen dem Feststoffaustrag und der förderwegs eingangsseitig angeordneten Siebfläche eine Siebvorrichtung aufweist, deren auf das Fördermittel projizierte Siebfläche größer ist als der Durchmesser des Förderrohrs, wobei die Siebvorrichtung in Höhe des maximalen Flüssigkeitsspiegels im Gerinne angeordnet ist und abgesiebte feste Bestandteile oberhalb des maximalen Flüssigkeitsspiegels in das Fördermittel austrägt, und daß das Gerinne im Bereich der Siebvorrichtung entsprechend erweitert ausgebildet ist und sich die Siebvorrichtung über die gesamte Breite des Gerinnes erstreckt.

Demzufolge weist die erfindungsgemäße Vorrichtung eine zusätzliche Siebfläche auf, die im Bereich des maximalen Flüssigkeitsspiegels angeordnet ist. Hierdurch wird der Vorteil erzielt, daß bei steigendem Flüssigkeitsanfall nicht nur die im Stand der Technik bekannte Siebfläche der Förderrinne wirksam ist, sondern daß zusätzlich die erfindungsgemäße Siebfläche wirkt, die zusätzliche feste Bestandteile absiebt und in die Förderrinne austrägt, von wo aus die festen Bestandteile mit der Wendel oder der Schnecke zum Feststoffaustrag gefördert werden.

Besonders vorteilhaft ist es, wenn die Siebvorrichtung eine Austragseinrichtung aufweist, die die auf der Siebvorrichtung abgesiebten festen Bestandteile in einen Trichter fördert, der die Siebvorrichtung mit dem Fördermittel verbindet. Auf diese Weise wird sichergestellt, daß die gesamte Menge der abgesiebten festen Bestandteile in den Wirkungsbereich der Schnecke bzw. der Wendel im Fördermittel gelangen, wobei die abgesiebten festen Bestandteile über den Trichter an einen vorbestimmten Punkt in das Fördermittel eingegeben werden, um eine optimale Abförderung der festen Bestandteile zu erzielen.

Es ist bei der voranstehend beschriebenen Ausführungsform der Erfindung vorgesehen, daß der Trichter oberhalb des maximalen Flüssigkeitsstandes angeordnet ist. Hierdurch wird sichergestellt, daß der Trichter nur die durch die Austragseinrichtung aufgenommenen Feststoffe aufnimmt und dem Fördermittel zuführt. Das Fluid gelangt auf diese Weise nicht in den Trichter, so daß die Feuchtigkeit des Feststoffes auf diese Weise nicht erhöht wird.

Um eine maximale Siebfläche innerhalb des Gerinnes zu erzielen und gleichzeitig über die Siebvorrichtung nur abgesiebte feste Bestandteile dem Trichter zuzuführen, ist es notwendig, den Teil der Siebvorrichtung, welcher über dem Trichter angeordnet ist ausgespart auszubilden und oberhalb des maximalen Flüssigkeitsstandes anzuordnen. Es hat sich daher als vorteilhaft erwiesen, die erfindungsgemäße Vorrichtung derart auszubilden, daß die Siebvorrichtung mit einem größeren Teil ihres Volumens unterhalb des maximalen Flüssigkeitsstandes angeordnet ist. Besonders vorteilhafte Siebergebnisse wurden dann erzielt, wenn zweidrittel der Siebvorrichtung unterhalb des maximalen Flüssigkeitsstandes angeordnet sind.

Es hat sich darüberhinaus als vorteilhaft erwiesen, die Förderschnecke oder Förderwendel im Bereich des Gerinnes in einer Förderrinne anzuordnen, deren Mantelfläche aus einer im Querschnitt halbkreisförmig ausgebildeten Siebplatte besteht. Die Förderrinne ist in diesem Bereich gegenüber den Seitenwänden des Gerinnes abgedichtet, so daß die gesamte Flüssigkeit durch die als Siebplatte ausgebildete Mantelfläche der Förderrinne strömt. Im Bereich oberhalb des im Gerinne angeordneten Teils der erfindungsgemäßen Vorrichtung kann sowohl eine Förderrinne als auch ein Förderrohr eingesetzt werden. Hierbei hat es sich jedoch als vorteilhaft erwiesen, ein Förderrohr zu verwenden, da hierdurch eine größere Stabilität der Wendel bzw. der Schnecke erzielbar ist. Diese Stabilität führt insbesondere zu einem verbesserten Gleichlauf der Wendel bzw. der Schnecke, da die Wendel bzw. die Schnecke im Bereich des Förderrohres allseitig eingespannt ist, so daß die Wendel- bzw. Schneckenaußenseiten an der Innenfläche des Förderrohres anliegen. Hierbei ist es möglich, daß der Trichter die abgesiebten festen Bestandteile entweder im Bereich der offenen Förderrinne oder im Bereich des zu diesem Zwecke geöffneten Förderrohres in das Fördermittel übergibt.

Nach einem weiteren Merkmal der Erfindung ist vorgesehen, daß an der Förderwendel bzw. an der Förderschnecke außenseitig eine Bürste oder dergleichen angeordnet ist, die aus einem Bürstenkörper und einer Vielzahl in dem Bürstenkörper gehaltenen Borsten besteht. Mit diesen Bürsten wird die Siebfläche kontinuierlich gereinigt, so daß Verstopfungen der Sieblöcher vermieden werden und die Vorrichtung einen wesentlich verbesserten Wirkungsgrad hat.

Bei der Bürste ist es erfindungsgemäß vorgesehen, daß die Zwischenräume zwischen den Borsten mit einer Gummimasse ausgefüllt sind. Ferner ist es vorteilhaft, wenn die Borsten und/oder die Gummimassen in einem Gummimantel angeordnet sind, so daß in dem Bürstenkörper ein Gummikörper mit eingebetteten Borsten befestigt ist.

Schließlich hat es sich bei der Bürste als besonders vorteilhaft herausgestellt, daß die Gummimasse und/oder der Gummimantel aus einem mit den Borsten verschließenden Zwei-Komponenten-Gummi besteht. Derartig ausgebildet stellt die Bürste ein sehr gutes Reingungsergebnis bei geringen Borstenverlust bereit.

Die Siebvorrichtung weist in vorteilhafter Weise eine Siebplatte und eine als Rechen oder dergleichen ausgebildete Austragseinrichtung auf, die angetrieben ist und die auf der Platte abgelagerte feste Bestandteile in den Trichter fördert. Bei einer ersten vorteilhaften Ausführungsform der Erfindung ist vorgesehen, daß die Siebplatte kreisförmig ausgebildet und der Rechen oder dergleichen um die Mittelachse der Siebplatte drehend angetrieben ist. Hierdurch wird ein kontinuierliches Austragen der auf der Siebplatte gelagerten festen Bestandteile in den im oberen Bereich der Siebplatte angeordneten Trichter ermöglicht. Durch eine Einstellung der Drehzahl des den Rechen antreibenden Motors kann dem Feststoffanfall entsprechend die Reinigungsfrequenz der Siebplatte eingestellt werden.

Bei einer zweiten Ausführungsform der Erfindung ist vorgesehen, daß die Siebplatte rechteckförmig ausgebildet ist und daß der Rechen oder dergleichen entlang einer parallel zu einer Kante der Siebplatte verlaufenden Führung bewegbar ist. Hierbei hat es sich als besonders vorteilhaft erwiesen, die Führung parallel zur Achsrichtung der Förderrinne anzuordnen, so daß der abgelagerte Feststoff entlang der Siebplatte parallel zur Förderrinne durch den Rechen oder dergleichen transportiert wird, bevor der Feststoff in die Förderrinne oder ein evtl. darüber angeordnetes Förderrohr über den Trichter eingegeben wird.

Bei dieser Ausgestaltung der Erfindung ist es ferner vorteilhaft, beidseitig der Förderrinne eine Trichterrinne anzuordnen, in die die festen Bestandteile von dem parallel zur Förderrinne geführten Rechen oder dergleichen geschoben werden, von wo aus die festen Bestandteile in den Trichter gelangen. Eine Verbesserung der Förderung der festen Bestandteile in den Trichterrinnen wird dadurch erzielt, daß oberhalb der Trichterrinne eine Bedüsungsvorrichtung angeordnet ist, die entweder mit Brauchwasser oder mit einem Luftstrom die in die Trichterrinnen eingeschobenen Bestandteile in die Förderrinne fördert.

Bei einer zweiten Möglichkeit der zweiten Ausführungsform ist vorgesehen, daß die Führung im rechten Winkel zur Achsrichtung der Förderrinne verläuft. Um zu verhindern, daß bei dieser Ausführungsform eine zu große Menge Flüssigkeit in die Förderrinne gelangt, ist nach einem weiteren Merkmal der Erfindung vorgesehen, daß die Siebplatte zweiteilig ausgebildet ist und die Hälften beidseitig der Förderrinne angeordnet sind und daß die Hälften der Siebplatte unter einem Winkel zum Trichter angestellt sind, so daß die festen Bestandteile entgegen der Schwerkraft gefördert werden. Durch das Anstellen der beiden Hälften der Siebplatte wird sichergestellt, daß die auf die Siebplattenhälften auftreffende Flüssigkeit nicht mit dem Rechen oder dergleichen in die Förderrinne ausgetragen wird, sondern mit der Schwerkraft in den Fluidstrom zurückgelangt.

Bei den zuvorbeschriebenen Möglichkeiten der zweiten Ausführungsform ist in vorteilhafter Weise vorgesehen, daß die Führung als Umlaufschiene ausgebildet ist. Ferner hat es sich als vorteilhaft erwiesen, beidseitig der Förderrinne eine Führung anzuordnen, an der jeweils ein Rechen oder dergleichen bewegbar geführt ist. Die Rechen oder dergleichen sind an den als Umlaufschienen ausgebildeten Führungen geführt und werden über zumindest einen Antriebsmotor angetrieben. Die Kraftübertragung von diesem Antriebsmotor auf die Rechen kann in unterschiedlicher Weise erfolgen. Denkbar sind hierbei form- und kraftschlüssige Kraftübertragungselemente, wie beispielsweise Kettentriebe, Triebstöcke, Riementriebe oder dergleichen. Durch die Ausbildung der Führungen als Umlaufschienen ist in besonders einfacher Weise der Vorteil erzielt worden, daß ein Umschalten des Antriebsmotors vermieden wird. Die Rechen werden vielmehr kontinuerlich in eine Richtung bewegt, wobei sie im wesentlichen während einer Hälfte eines Umlaufes die festen Bestandteile von der Siebplatte in den Trichter fördern.

Bei einer dritten Ausführungsform der Erfindung ist vorgesehen, daß die Siebvorrichtung als drehend angetriebenes Trommelsieb ausgebildet ist, in dessen Mittelachse die Förderrinne angeordnet ist. Der Antrieb des Trommelsiebes erfolgt hierbei in vorteilhafter Weise dadurch, daß das Trommelsieb im Bereich einer Stirnseite einen Antriebszahnkranz aufweist, der mit einem von einem Motor angetriebenen Antriebsritzel kämmt. Das Trommelsieb hat im Vergleich zu den zuvor beschriebenen Ausführungsformen der Erfindung den Vorteil, daß seine wirksame Siebfläche größer ist und somit eine größere Menge fester Bestandteile aufnehmen kann. Die festen Bestandteile werden auf der inneren Mantelfläche des Trommelsiebes abgelagert und durch die Drehung des Trommelsiebes in einen Bereich oberhalb des maximalen Flüssigkeitsstandes gefördert, von wo aus die festen Bestandteile in einen innerhalb des Trommelsiebes angeordneten Trichter gelangen und über die unterhalb des Trichters angeordnete Schnecke oder Wendel zum Feststoffaustrag gefördert werden.

Hierbei hat es sich als vorteilhaft erwiesen, parallel zur Achsrichtung des Trommelsiebes eine Bedüsungsvorrichtung oberhalb des Trommelsiebes anzordnen, wodurch die an der inneren Mantelfläche des Trommelsiebes anhaftenden festen Bestandteile im Bereich des Trichters abgespült (mit Brauchwasser) oder mit einem Druckluftstrom weggeblasen werden. Demzufolge ist die Bedüsungsvorrichtung dem Trichter gegenüberliegend angeordnet.

Schließlich hat es sich als vorteilhaft erwiesen, die Austragseinrichtung in Abhängigkeit der Menge des Flüssigkeitsanfalls steuerbar auszubilden. Demzufolge wird beispielsweise der Antrieb des Trommelsiebes oder die Antriebe der Rechen oder dergleichen nur dann eingeschaltet, wenn der Flüssigkeitsstand eine entsprechende Höhe erreicht hat, welche die Aktivierung der zusätzlichen Siebvorrichtung erfordert.

Die Vorrichtung dient damit zum Austragen von festen Bestandteilen aus einer, in einem Gerinne strömenden Flüssigkeit, bei dem die Flüssigkeit auf eine Siebwendel geleitet wird, die aus einer in einem zumindest in Teilflächen als Siebfläche ausgebildeten Förderrohr und/oder einer Förderrinne drehend angetriebenen Förderwendel bzw. Förderschnecke besteht, die festen Bestandteile durch die Siebfläche aus der Flüssigkeit herausgesiebt und anschließend mit der Förderwendel bzw. der Förderschnecke in Achsrichtung des Förderrohres und/oder der Förderrinne zu einem Feststoffaustrag ausgetragen werden.

Dabei wird die Flüssigkeit in Abhängigkeit seiner Menge über eine Siebvorrichtung geleitet, die zwischen dem Feststoffaustrag und der Siebfläche im Bereich des maximalen Flüssigkeitsspiegels im Gerinne angeordnet ist, wobei die Siebvorrichtung eine im Vergleich zur Siebfläche des Förderrohres bzw. der Förderrinne größere aktive Siebfläche aufweist. Ferner werden die über die Siebvorrichtung abgesiebten festen Bestandteile in das Förderrohr bzw. die Förderrinne ausgetragen.

Besonders vorteilhaft ist es, daß das Austragen von festen Bestandteilen aus einer Flüssigkeit, beispielsweise einem Feststoff-Flüssigkeits-Gemisch in Abhängigkeit der Menge des zu reinigenden Feststoff-Flüssigkeits-Gemisches gesteuert werden kann. Hierbei wird bei geringerem Flüssigkeitsanfall nur die im Förderrohr bzw. in der Förderrinne angeordnete Siebfläche mit der Flüssigkeit beaufschlagt. Steigt nunmehr die Flüssigkeitsmenge an, so kann in Abhängigkeit der Menge der Flüssigkeit die Siebvorrichtung aktiviert werden, die zwischen dem Feststoffaustrag und der Siebfläche im Bereich des maximalen Flüssigkeitsspiegels im Gerinne angeordnet ist. Die über diese Siebvorrichtung abgesiebten Feststoffbestandteile werden dann in das Förderrohr bzw. die Förderrinne eingetragen und in diesem gemeinsam mit den über die Siebfläche im Förderrohr bzw. der Förderrinne abgesiebten und über die Förderschnecke bzw. die Förderwendel abgezogenen festen Bestandteile ausgetragen.

Bevorzugt ist vorgesehen, daß die Siebvorrichtung Austragseinrichtungen aufweist, die bei einem bestimmten Flüssigkeitsspiegel aktiviert werden. Hierbei handelt es sich vorzugsweise um Rechen, die über einen Motor angetrieben und entlang der Siebvorrichtung geführt sind. Eine erhebliche Energieeinsparung wird dadurch erzielt, daß diese Austragseinrichtungen nur dann betrieben werden, wenn auch eine entsprechende Menge von Flüssigkeit gereinigt werden soll, d. h. daß ein bestimmter Flüssigkeitsspiegel innerhalb des Gerinnes erreicht ist.

Die Aktivierung der Austragseinrichtungen kann beispielsweise in vorteilhafter Weise durch Sensoren erreicht werden, die im Bereich des Gerinnes angeordnet sind und die bei einem Steigen des Flüssigkeitsspiegels die Inbetriebnahme der Austragseinrichtungen steuern. Es ist aber auch denkbar, die Austragseinrichtungen in einfacher Weise über Schwimmer zu steuern, die bei einem bestimmten Flüssigkeitsspiegel einen Stromkreis schließen, in welchen die Austragseinrichtungen geschaltet sind.

Um einen problemlosen Ablauf zu gewährleisten, ist vorzugsweise vorgesehen, daß die Siebfläche und die Siebvorrichtung in regelmäßigen Intervallen mit einer Bürste oder dergleichen gereinigt werden. Mit einem derartigen Reinigungswerkzeug werden die festen Bestandteile entfernt, die in den Sieblöchern der Siebvorrichtung bzw. der Siebfläche während des Betriebes haften bleiben und somit eine Verstopfung dieser Konstruktionsteile hervorrufen. Hierbei hat es sich als besonders vorteilhaft erwiesen, die Siebfläche und die Siebvorrichtung mit einer Bürste zu reinigen, die eine Vielzahl von Borsten hat, welche in einem Bürstenkörper aus Metall oder Kunststoff befestigt sind, wobei die Borsten mit einer bei der Reinigung verschleißenden Gummimasse umgeben sind.

Zum Reinigen von Lochsieben, beispielsweise in Siebrechenanlagen werden in der Regel Bürsten mit Kunststoffborsten oder Stahlborsten verwendet. Diese Borsten unterliegen einem relativ hohen Verschleiß, da sie ständig in die Sieblöcher stechen und häufig umgeknickt werden. Durch diese mechanische Belastung brechen die Borsten nach einer gewissen Zeit ab oder werden aus dem Bürstenkörper herausgerissen. Die alternative Verwendung von Gummischabern zur Reinigung von Lochsieben hat sich als nicht praktikabel erwiesen, da die Gummischaber die Löcher in den Sieben nicht frei stoßen, sondern vielmehr die zu entfernenden Feststoffpartikel in die Löcher hineindrücken und auf diese Weise wird genau das Gegenteil, nämlich eine weitere Verschmutzung der Lochsiebe erzielt.

Aufgrund der besseren Verschleißeigenschaften weist der Werkstoff Gummi jedoch bedeutende Vorteile gegenüber den für die Borsten verwendeten Werkstoff für Kunststoff oder Stahl auf. Demzufolge ist es besonders vorteilhaft, die Borsten mit einem Zwei-Komponenten-Gummi zu vergießen, so daß die Borsten zusammen mit der Gummimasse ein homogenes Gebilde bilden. Bei der Herstellung einer derartigen Bürste fließt die Gummimasse bis zu ihrem Aushärtepunkt in sämtliche Hohlräume zwischen den Borsten. Die Gummimasse ist insbesondere derart konzipiert, daß sie bei der Reinigung der Siebfläche und der Siebvorrichtung in gleicher Weise verschleißt wie die einzelnen Borsten. Die Gummimasse wirkt in diesem Fall einerseits im ausgehärteten Zustand als elastische aber feste Verbindung der einzelnen Borsten mit dem Bürstenkörper und dem Bürstenkern, der zumeist als Stahldraht ausgebildet ist, und andererseits als elastisches Stützkorsett für die Borsten außerhalb des Bürstenkörpers. Da die Gummimasse außerhalb des Bürstenkörpers gleichmäßig mit den Borsten verschleißt, erhöht sie wesentlich die Lebensdauer der Borsten. Ein Abbrechen der Borsten durch häufiges hin- und herbiegen wird durch die Gummimasse verhindert. Die Borsten erfüllen somit ihre eigentliche Aufgabe, nämlich die Löcher des Lochsiebes freizustechen. Die innerhalb des Bürstenkörpers in der Gummimasse eingebetteten Borstenhaare sind andererseits durch die Gummimasse fest miteinander verbunden, so daß einzelne Borsten nicht mehr aus dem Bürstenkörper herausgezogen werden können.

Weitere Merkmale und Vorteile der Erfindung ergeben sich aus der nachfolgenden Beschreibung der zugehörigen Zeichnung in der bevorzugte Ausführungsformen der Erfindung dargestellt sind. In der Zeichnung zeigt:
- Figur 1: den unteren Teil einer ersten Ausführungsform einer erfindungsgemäßen Vorrichtung zum Austragen von festen Bestandteilen aus einer Flüssigkeit in geschnittener Seitenansicht;
- Figur 2: den oberen Teil der Vorrichtung gemäß Figur 1 in Seitenansicht;
- Figur 3: die Vorrichtung gemäß Figur 1 in geschnittener Draufsicht;
- Figur 4: die Vorrichtung gemäß den Figuren 1 bis 3 in geschnitten dargestellter Vorderansicht;
- Figur 5: eine zweite Ausführungsform der erfindungsgemäßen Vorrichtung zum Austragen von festen Bestandteilen aus einer Flüssigkeit in Seitenansicht;
- Figur 6: die Vorrichtung gemäß Figur 5 in einer Draufsicht;
- Figur 7: eine dritte Ausführungsform der Vorrichtung zum Austragen von festen Bestandteilen aus einer Flüssigkeit in einer Draufsicht;
- Figur 8: die Vorrichtung gemäß Figur 7 in einer Seitenansicht entlang der Linie VIII-VIII in Figur 7;
- Figur 9: eine vierte Ausführungsform der Vorrichtung zum Austragen von festen Bestandteilen aus einer Flüssigkeit in einer teilweise geschnittenen Seitenansicht;
- Figur 10: die Vorrichtung gemäß Figur 9 in einer Seitenansicht entlang der Linie X-X in Figur 9 und
- Figur 11: eine Bürste zur Reinigung der Siebfläche und der Siebvorrichtung in einer geschnittenen Seitenansicht.

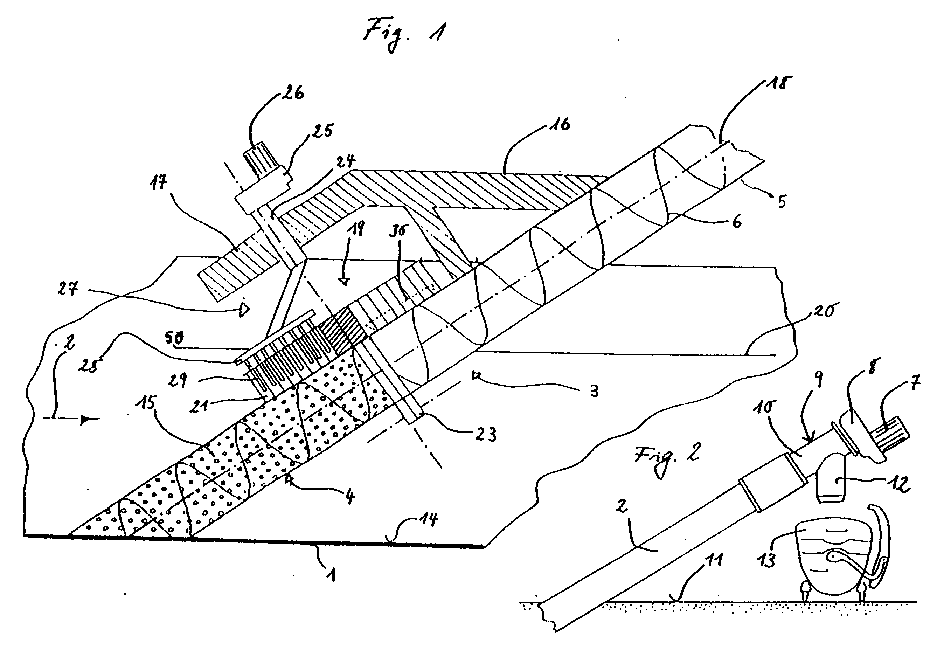

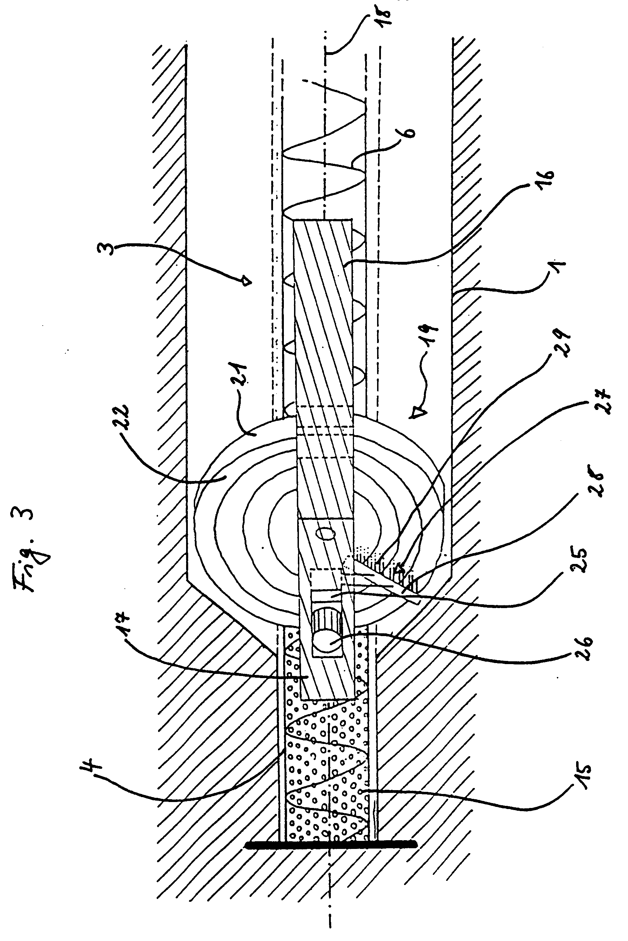

In den Figuren 1 bis 4 ist eine erste Ausführungsform einer Vorrichtung zum Austragen von festen Bestandteilen aus einer Flüssigkeit dargestellt. Die Vorrichtung ist in einem Gerinne 1 angeordnet, in welchem eine Flüssigkeit in Richtung eines in der Figur 1 dargestellten Pfeils 2 strömt. Die Vorrichtung besteht aus einem Fördermittel 3, welches eine Förderrinne 4 und ein Förderrohr 5 (vgl. Figur 2) aufweist. In der Förderrinne 4 und dem Förderrohr 5 ist eine Wendel 6 drehbar angeordnet, die von einem Motor 7 (vgl. Figur 2) angetrieben wird. Der Motor 7 überträgt seinen Drehmoment über ein Getriebe 8 auf die Wendel 6. Das Getriebe 8 ist auf einem Ende des Fördermittels 3, nämlich des Förderrohres 5 aufgesetzt, an dem das Förderrohr 5 einen Feststoffaustrag 9 aufweist, der aus einem angeflanschten Rohrstück 10 und einem daran, senkrecht zum Boden 11 ausgerichteten zweiten Rohrstück 12 besteht. Unterhalb des Rohrstücks 12 ist ein Auffangbehälter angeordnet, der die über den Feststoffaustrag 9 ausgetragenen festen Bestandteile aufnimmt.

Die Förderrinne 4, welche an dem, dem Feststoffaustrag 9 gegenüberliegenden Ende des Fördermittels 3 angeordnet ist, reicht bis zur Bodenfläche 14 des Gerinnes 1 und besteht aus einer Siebplatte 15, die im Querschnitt halbkreisförmig ausgebildet ist. Der Durchmesser der Förderrinne 4 entspricht im wesentlichen der Breite des Gerinnes 1.

Zwischen den Seitenflächen des Gerinnes 1 und der Förderrinne 4 sind nicht dargestellte Dichtelemente angeordnet, die ein Vorbeiströmen des Fluids an der Förderrinne 4 verhindern.

Die Siebplatte 15 der Förderrinne 4 weist eine Vielzahl von Bohrungen auf, deren Durchmesser in Abhängigkeit der abzusiebenden festen Bestandteile bemessen ist.

Oberhalb des Fördermittels 3 ist ein Traggestell 16 vorgesehen, das einerseits oberhalb der Siebplatte 15 an der Förderrinne 4 befestigt ist und andererseits einen Kragarm 17 hat, der parallel zur Längsachse des Fördermittels 3 verläuft.

Das Fördermittel 3 weist ferner eine Siebvorrichtung 19 auf, die zwischen dem Feststoffaustrag 9 und der förderwegseingansseitig angeordneten Siebplatte 15 angeordnet ist, wobei die Siebvorrichtung 19 in Höhe des maximalen Flüssigkeitsspiegels im Gerinne 1 angeordnet ist und abgesiebte feste Bestandteile in das Fördermittel 3 austrägt. Die Höhe des maximalen Flüssigkeitsspiegels ist in der Figur 1 durch eine Line 20 dargestellt.

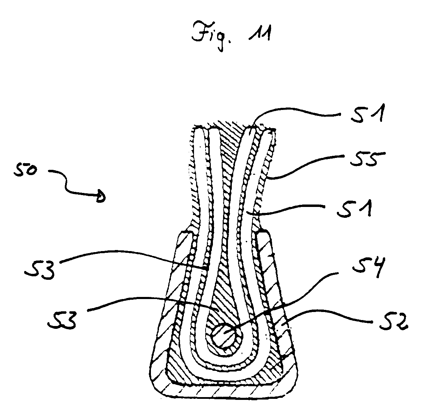

An der Förderwendel 6 ist eine Bürste 50 derart angeordnet, daß die Bürste 50 mit der Förderwendel 6 umläuft und die Siebplatte 15 abstreift, so daß feste Bestandteile, die von der Förderwendel 6 nicht transportiert werden von der Siebplatte 15 entfernt und in den Förderweg der Förderwendel 6 eingegeben werden. Die Bürste 50 ist hierbei außenseitig an einer einzelnen Wendel befestigt und läuft um die gesamte Wendel um. Es ist aber auch möglich, im gesamten Bereich der Förderwendel 6, der sich im Bereich der Siebplatte 15 befindet, eine durchgehende Bürste 50 anzuordnen. Die Konstruktion und Wirkungsweise der Bürste 50 wird im Folgenden noch unter Bezugnahme auf die Figur 11 beschrieben werden.

Nachfolgend wird die Konstruktion der Siebvorrichtung 19 detailliert beschrieben.

Die Siebvorrichtung 19 besteht aus einem flachzylindrischen Gehäuse 21, in das eine Siebplatte 22 eingesetzt ist. Die Siebvorrichtung 19 ist über eine Halterung 23 an dem Fördermittel 3 unterhalb des Kragarms 17 befestigt. In dem Kragarm 17 ist eine Welle 24 drehbar gelagert, die antriebsseitig über ein Getriebe 25 mit einem Motor 26 verbunden ist. Abtriebsseitig ist an der Welle 24 eine Austragseinrichtung 27 befestigt, die einen Rechen 28 aufweist. Der Rechen 28 hat eine Vielzahl von Zähnen 29, die auf einer Kreisbahn im Gehäuse 21 der Siebvorrichtung 19 bewegt werden. Hierbei beträgt die Länge des Rechen 28 ungefähr die Länge des halben Durchmessers der kreisförmig ausgebildeten Siebplatte 22.

Die Zähne 29 des Rechens 28 greifen soweit in das Gehäuse 21 der Siebvorrichtung 19 ein, daß sie über die Siebplatte 2 gleiten und derart auf der Siebplatte abgelagerte feste Bestandteile auf den von ihnen beschriebenen Kreisbahnen fördern.

Oberhalb der Linie 20 des maximalen Fluidstandes ist im Gehäuse 21 der Siebvorrichtung 19 ein Trichter 30 angeordnet, zu dessen Kontur passend in der Siebplatte 22 eine Aussparung angeordnet ist. Der Trichter 30 ist austragsseitig mit der Förderrinne 4 verbunden, so daß die von den Zähnen 29 des Rechens 28 auf ihren Kreisbahnen im Gehäuse 21 geförderten festen Bestandteile über den Trichter 30 in die Förderrinne 4 fallen und anschließend über die Wendel 6 in Richtung des Feststoffaustrages 9 transportiert werden, von wo aus sie in den Auffangbehälter 13 geschüttet werden.

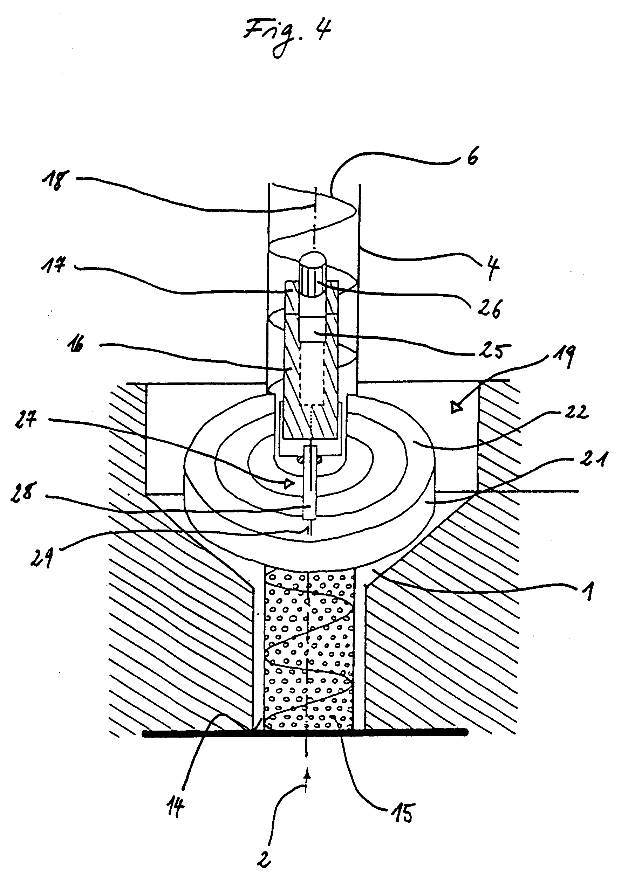

Wie in den Figuren 3 und 4 zu erkennen ist, ist das Gerinne 1 im Bereich der Siebvorrichtung 19 entsprechend dem Durchmesser des Gehäuses 21 verbreitert ausgebildet, wodurch ein entsprechend vergrößerter Flüssigkeitsanfall sowohl durch die Siebplatte 15 der Förderrinne 4 als auch durch die Siebplatte 22 der Siebvorrichtung 19 abgesiebt und von festen Bestandteilen befreit werden kann.

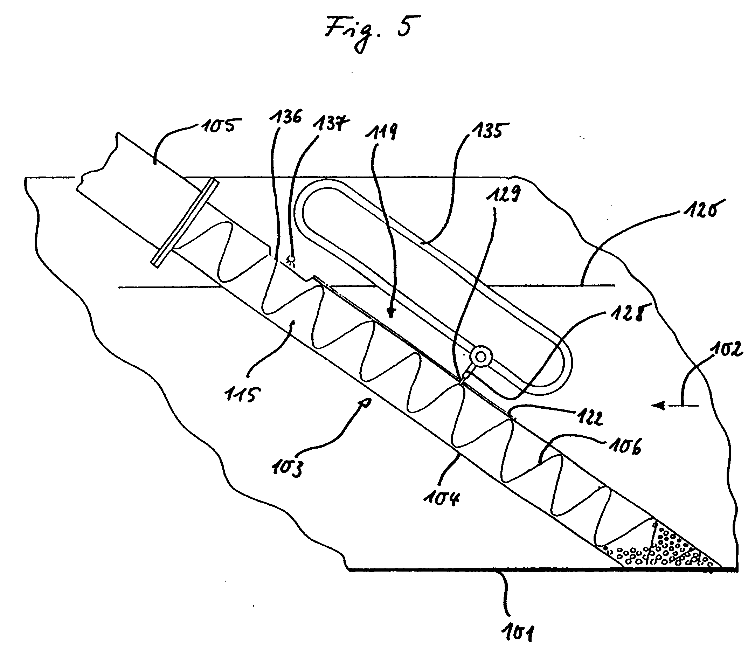

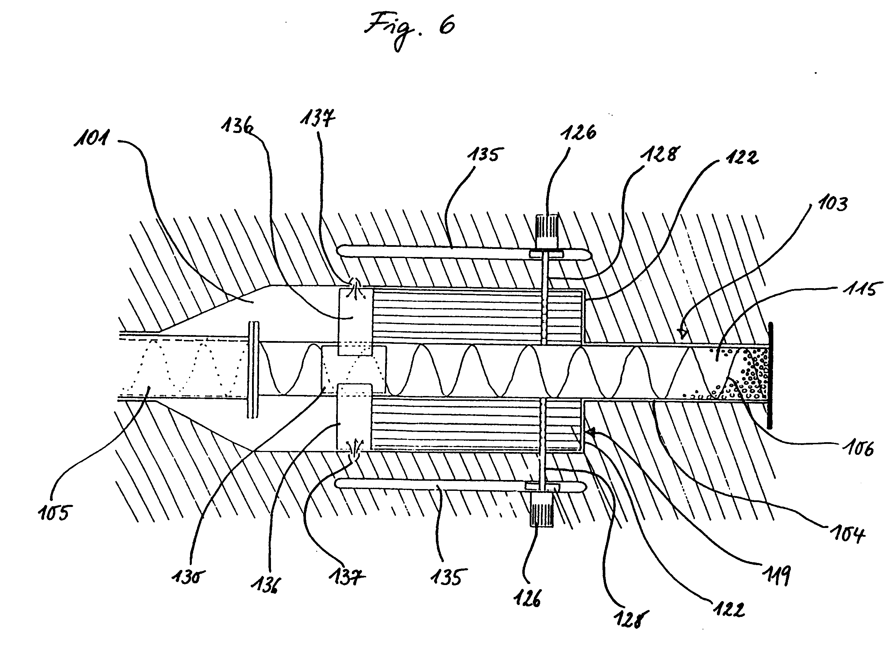

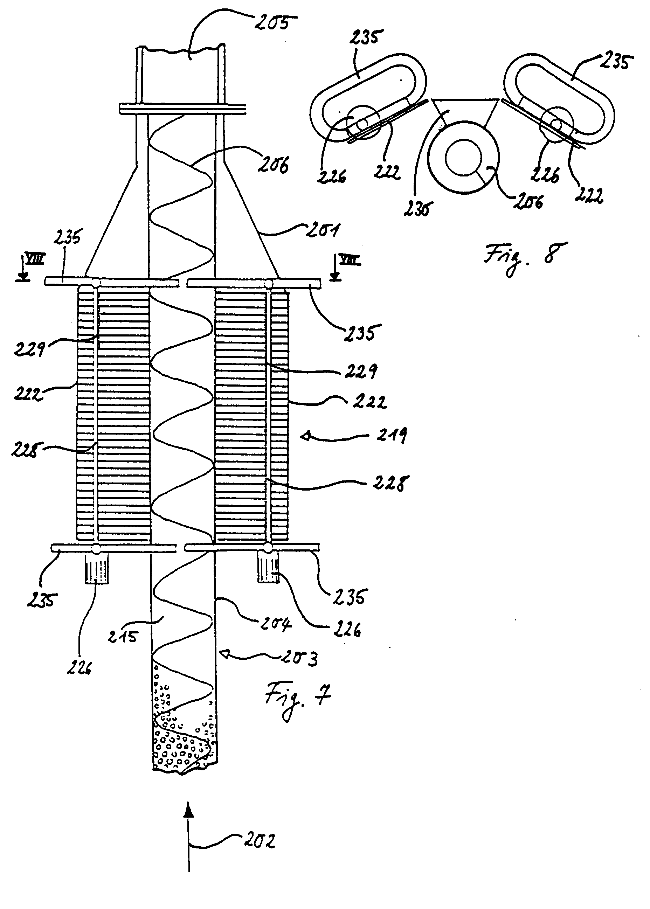

In den Figuren 5 und 6 ist eine zweite Ausführungsform der Vorrichtung zum Austragen von festen Bestandteilen aus einer Flüssigkeit dargestellt. Diese Vorrichtung ist in einem Gerinne 101 angeordnet und besteht aus einem Fördermittel 103. Das Fördermittel 103 weist eine Förderrinne 104 und ein koaxial zur Förderrinne 104 angeordnetes Förderrohr 105 auf, wobei in der Förderrinne 104 und dem Förderrohr 105 eine Wendel 106 drehbar angeordnet ist, die von einem nicht dargestellten Motor angetrieben wird. Das Förderrohr 105 weist an seinem freien, nicht dargestellten Ende einen nicht dargestellten Feststoffaustrag auf.

Die Förderrinne 104 besteht aus einer Siebplatte 115, die im Querschnitt halbkreisförmig ausgebildet ist. Das Fördermittel 103 ist unter einem Winkel in Richtung der durch einen Pfeil 102 angezeigten Flüssigkeitsströmung geneigt in dem Gerinne 101 angeordnet.

Die Konstruktion des Fördermittels 103 und des Gerinnes 101 entspricht im wesentlichen der Konstruktion des Fördermittels 3 und des Gerinnes 1 gemäß den Figuren 1 bis 4.

An der Förderrinne 104 ist beidseitig jeweils eine Siebplatte 122 befestigt, welche rechteckig ausgebildet sind. Parallel zu der Förderrinne 104 verlaufen beidseitig der Förderrinne 104 als Umlaufschienen ausgebildete Führungen 135, an dene jeweils ein Rechen 128 umlaufend geführt ist, der entlang der Siebplatte 122 gleitet. Die beidseitig angeordneten Rechen 128 fördern derartig angeordnet auf den Siebplatten 122 abgelagerte feste Bestandteile, welche aus dem Flüssigkeitsstrom herausgesiebt wurden, in Richtung zweier, jeweils am oberen Ende der Siebplatten 122 angeordneten Trichterrinnen 136, von wo aus die festen Bestandteile einem Trichter 130 aufgegeben werden, der oberhalb der Wendel 106 in der Förderrinne 104 angeordnet ist. Wie insbesondere aus der Figur 5 zu erkennen ist, ist der Trichter 130 oberhalb des maximalen Flüssigkeitssandes angeordnet, welcher durch eine Linie 120 angedeutet ist.

Zur Verbesserung der Förderung der über die Siebplatten 122 in die Trichterrinnen 136 geförderten festen Bestandteilen ist an jeder Trichterrinne eine Bedüsungsvorrichtung 137 angeordnet. Die Bedüsungsvorrichtungen 137 befinden sich hierbei an den dem Trichter 130 gegenüberliegenden Kanten der Trichterrinnen 136. Die Bedüsungsvorrichtungen 137 können alternativ mit Brauchwasser oder mit einem Luftstrom betrieben werden.

Der Antrieb der beiden Rechen 128 erfolgt über jeweils einen Antriebsmotor 126, der seinen Drehmoment beispielsweise auf eine endlos umlaufende Kette überträgt, die ein Mitnahmeelement aufweist, an dem ein Rechen 128 befestigt ist. Derartig ausgebildet wird jeder Rechen 128 entlang der als Umlaufschiene ausgebildeten Führung derart bewegt, daß er bei einer Bewegung in Richtung der Förderrichtung der Wendel 106 mit seinen Zähnen 129 auf der jeweiligen Siebplatte 122 aufliegt und die dort angesammelten festen Bestandteile in Richtung der Förderrichtung der Wendel 106 zu den Trichterrinnen 136 und letztendlich zu dem Trichter 130 fördert.

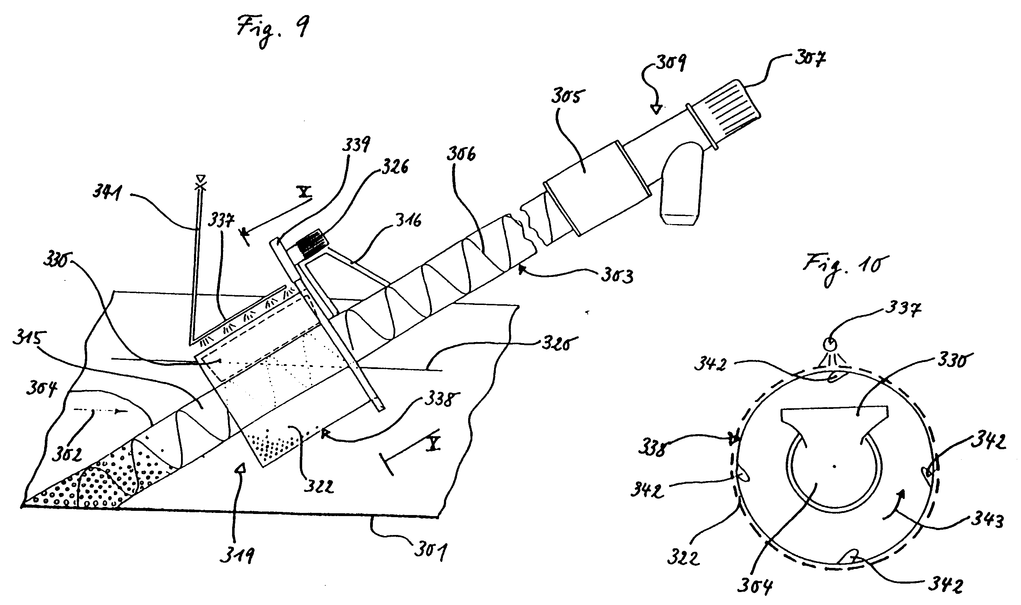

Eine weitere Ausführungsform der erfindungsgemäßen Vorrichtung zum Austragen von festen Bestandteilen aus einer Flüssigkeit ist in den Figuren 7 und 8 dargestellt. Bei dieser Ausführungsform ist ebenfalls in einem Gerinne 201 ein Fördermittel 203 angeordnet, das aus einem Förderrohr 205 und einer Förderrinne 204 besteht, wobei die Förderrinne 204 eine Siebplatte 215 aufweist, die im Querschnitt halbkreisförmig ausgebildet ist. An der Förderrinne 204 sind beidseitig jeweils eine Siebplatte 222 befestigt, wobei das Gerinne 201 in diesem Bereich eine Breite aufweist, die mit der Summe der Breite beider Siebplatten 222 und dem Durchmesser der Förderrinne 204 übereinstimmt.

Oberhalb der Förderrinne 204 sind beidseitig jeweils zwei als Umlaufschienen ausgebildete Führungen 235 angeordnet. Die Führungen 235 verlaufen rechtwinklig zur Mittelachse der Förderrinne 4. Zwischen jeweils zwei, an gegenüberliegenden Enden der Siebplatten 222 angeordneten Führungen 235 ist ein Rechen 228 gelagert, der von einem Motor 226 entlang der Umlaufschienen bewegt wird. Der Rechen 228 ist derart angeordnet, daß er mit seinen Zähnen bis auf die Siebplatte 222 reicht und die dort abgelagerten festen Bestandteile von der Siebplatte abstreicht und in einen zwischen den beiden gegenüberliegenden Siebplatten, oberhalb der Wendel 206 angeordneten Trichter 230 fördert.

Um zu verhindern, daß mit den auf den Siebplatten 222 abgelagerten festen Bestandteilen auch Teile der Flüssigkeit in den Trichter 30 ausgetragen werden, sind die Siebplatten 222 unter einem Winkel zum Trichter 230 angestellt, so daß die festen Bestandteile von den Rechen 228 entgegen der Schwerkraft gefördert werden müssen. Auf die Siebplatten 222 auftreffende Flüssigkeit fließt demzufolge mit der Schwerkraft ab und gelangt auf diese Weise zurück in das Gerinne 201.

Die Bewegung der Rechen 228 entlang der als Umlaufschienen ausgebildeten Führungen 235 erfolgt analog zu der zuvor zu dem Ausführungsbeispiel gemäß den Figuren 5 und 6 beschriebenen Bewegungen.

Schließlich ist in den Figuren 9 und 10 ein weiteres Ausführungsbeispiel der erfindungsgemäßen Vorrichtung zum Austragen von festen Bestandteilen aus einer Flüssigkeit dargestellt, wobei die Siebvorrichtung 319 als Trommelsieb 338 ausgebildet ist in dessen Mittelachse die Förderrinne 304 verläuft, welche eine Siebplatte 315 aufweist, die im Querschnitt halbkreisförmig ausgebildet ist. An die Förderrinne 304 schließt sich in bereits beschriebener Weise ein Förderrohr 305 an, welches in einen Feststoffaustrag 309 mündet. In der Förderrinne 304 und dem Förderrohr 305, die zusammen das Fördermittel 303 bilden, ist eine Wendel 306 drehbar angeordnet, die von einem Motor 307 angetrieben wird. Das Fördermittel 303 reicht mit seiner Förderrinne 304 in ein Gerinne 301, in dem eine Flüssigkeit in Richtung eines Pfeils 302 strömt. Es ist aus der Figur 9 zu erkennen, daß das Fördermittel 303 unter einem Winkel in Richtung des Flüssigkeitsstroms geneigt in dem Gerinne 301 angeordnet ist.

Das Trommelsieb 338 besteht aus einer Siebplatte 322, die im wesentlichen zylinderförmig gebogen ausgebildet ist. Das Trommelsieb 338 ist derart im Gerinne 301 angeordnet, daß sich der überwiegende Teil, nämlich zweidrittel seines Volumens unterhalb eines maximalen Flüssigkeitsstandes befindet, der durch eine Linie 320 in Figur 9 angezeigt ist. Das Gerinne 301 ist im Bereich des Trommelsiebes 338 verbreitert ausgebildet, so daß das Trommelsieb 338 in einer durch das Gerinne 301 gebildeten Ausnehmung umläuft. Ansonsten weist das Gerinne 301 im Bereich unterhalb des Trommelsiebes 338 eine Breite auf, die im wesentlichen mit dem Durchmesser mit der Förderrinne 304 übereinstimmt. In Strömungsrichtung hinter der Siebvorrichtung 319 kann das Gerinne 301 verbreitert ausgebildet sein.

Der Antrieb des Trommelsiebes 338 erfolgt über einen Motor 326, der über ein nicht dargestelltes Getriebe ein Antriebsritzel 339 antreibt, welches mit einem Antriebszahnkranz 340 kämmt. Der Antriebszahnkranz 340 ist drehfest mit der Mantelfläche bzw. der Stirnseite des Trommelsiebes 338 verbunden. Hierbei hat es sich als vorteilhaft erwiesen, den Antriebszahnkranz 340 entweder auf die Mantelfläche oder auf eine Stirnfläche des Trommelsiebes 338 zu schweißen.

Es ist aus der Figur 9 zu erkennen, daß der Motor 326 auf einen Traggestell 316 befestigt ist, welches wiederum an dem Fördermittel 303 angeordnet ist.

Zwischen der Mantelfläche des Trommelsiebes 338 und der offenen Seite der Förderrinne 304 ist ein Trichter 330 derart angeordnet, daß sein wesentlicher Bestandteil oberhalb des durch die Linie 320 angedeuteten maximalen Flüssigkeitspegels angeordnet ist. Im Bereich des Trichters 330 ist außerhalb des Trommelsiebes 338 eine Bedüsungsvorrichtung 337 angeordnet, die an eine Brauchwasserleitung 341 angeschlossen ist und mehrere entlang der Bedüsungsvorrichtung 337 angeordnete Düsen aufweist. Die Bedüsungsvorrichtung 337 ist, wie in Figur 9 erkennbar parallel zur Längsachse des Trommelsiebes 338 angeordnet.

In Figur 10 ist zu erkennen, daß an der inneren Mantelfläche des Trommelsiebes 338 vier Mitnehmerleisten 342 befestigt sind, von denen jeweils zwei diametral gegenüberliegend angeordnet sind. Die Drehrichtung des Trommelsiebes 338 ist in der Figur 10 durch einen Pfeil 343 dargestellt.

Der Austrag fester Bestandteile aus einem im Gerinne 301 strömenden Flüssigkeit erfolgt dadurch, daß ein Teil der festen Bestandteile bereits durch die Siebplatte 315 ausgesiebt und über die Wendel 306 in Richtung des Feststoffaustrages 309 gefördert werden. Bei einem großen Flüssigkeitsanfall steigt der Pegel im Gerinne 301 bis zur der durch die Linie 320 angedeuteten Maximalmarke an, wodurch ein Teil der Flüssigkeit nun durch das drehend angetriebene Trommelsieb 338 strömt. Die in der Flüssigkeit enthaltenen festen Bestandteile werden an der Innenmantelfläche des Trommelsiebes 338 abgeschieden und durch die Drehung des Trommelsiebes 338 und die Mitnehmerleisten 342 in den Bereich des Trommelsiebes 338 oberhalb des Trichters 330 gefördert. Durch eine kontinuierliche Bedüsung der Außenmantelfläche des Trommelsiebes 338 werden die an der Innenmantelfläche des Trommelsiebes 338 anhaftenden festen Bestandteile abgelöst und in den Trichter 330 gefördert, von wo aus sie der Förderrinne 304 zugeführt und über den Feststoffaustrag 309 ausgetragen werden.

In gleicher Weise erfolgt die Funktionsweise der zuvorbeschriebenen Ausführungsbeispiele gemäß den Figuren 1 bis 8. In jedem Fall wird die zusätzliche Siebvorrichtung 19, 119, 219 und 319 in Abhängigkeit der Flüssigkeitsströmung gesteuert. Demnach werden die zusätzlichen Siebvorrichtung 19, 119, 219 und 319 nur dann aktiviert, wenn der Pegel der durchströmenden Flüssigkeit eine zusätzliche Siebvorrichtung erfordert.

Die voranstehend beschriebene Erfindung ist nicht auf die dargestellten Ausführungsformen beschränkt. Vielmehr sind Abwandlungen und Änderungen möglich, ohne den Schutzbereich der Erfindung zu verlassen. Bei der erfindungsgemäßen Vorrichtung kommt es in erster Linie nicht auf die Ausbildung der Rechenanlage oberhalb des maximalen Flüssigkeitspegels an, sondern darauf, eine Einrichtung vorzusehen, die als Sieb oder Rechen wirkt und die den abgesiebten Feststoff in die Förderschnecke befördert.

Mit den voranstehend beschriebenen Vorrichtungen wird ein Verfahren zum Austragen von festen Bestandteilen aus einer in einem Gerinne 1,101,201,301 strömenden Flüssigkeit durchgeführt, bei dem die Flüssigkeit auf eine Siebwendel geleitet wird, die aus einer in einem zumindest in Teilflächen als Siebfläche 15,115,215,315 ausgebildeten Förderrohr 5,105,205,305 und/oder einer Förderrinne 4,104,204,304 drehend angetriebenen Förderwendel 6,106,206,306 besteht. Bei diesem Verfahren werden die festen Bestandteile durch die Siebfläche 15,115,215,315 aus der Flüssigkeit herausgesiebt und anschließend mit der Förderwendel 6,106,206,306 in Achsrichtung des Förderrohres 5,105,205,305 und/oder der Förderrinne 4,104,204,304 zu dem Feststoffaustrag 9,309 gefördert. Die Flüssigkeit wird bei diesem Verfahren in Abhängigkeit seiner zu reinigenden Menge über die Siebvorrichtung 19,119,219,319 geleitet, die zwischen dem Feststoffaustrag 9,309 und der Siebfläche 15,115,215,315 im Bereich des maximalen Flüssigkeitsspiegels im Gerinne 1,101,201,301 angeordnet ist. Die Siebvorrichtung 19,119,219,319 weist zu diesem Zwecke eine im Vergleich zur Siebfläche 15,115,215,315 des Förderrohres 5,105,205,305 bzw. der Förderrinne 4,104,204,304 größere aktive Siebfläche auf. Die über die Siebvorrichtung 19,119,219,319 abgesiebten festen Bestandteile werden anschließend in das Förderrohr 5,105,205,305 bzw. die Förderrinne 4,104,204,304 über einen Trichter 30,130,230,330 ausgetragen.

Die Austragseinrichtungen 27,127,227,327 der Siebvorrichtung 19,119,219,319 werden bei den voranstehend erläuterten Verfahren in Abhängigkeit des Flüssigkeitspegels aktiviert, d. h. eingeschaltet. Hierbei kommt die Siebvorrichtung 19,119,219,319 erst dann zum Einsatz, wenn der Flüssigkeitspegel eine Höhe erreicht hat, die ein Austragen der festen Bestandteile aus der Flüssigkeit alleine über die Siebfläche 15,115,215,315 des Fördermittels 3,103,203,303 nicht mehr erlaubt.

In regelmäßigen Zeitabständen ist es erforderlich, die Siebfläche 15,115,215,315 und die Siebvorrichtung 19,119,219,319 zu reinigen, d. h. von nicht ausgetragenen festen Bestandteilen zu befreien. Hierbei haben sich die nicht ausgetragenen festen Bestandteile in den einzelnen Löchern der Siebe festgesetzt. Zur Reinigung der Siebfläche 15,115,215,315 und der Siebvorrichtung 19,119,219,319 wird eine Bürste 50 verwendet, die in Figur 11 dargestellt ist. Diese neue Bürste 50 besteht aus einem Bürstenkörper 52, in dessen Längsrichtung ein Bürstenkern 54 verläuft. Der Bürstenkörper 52 ist im Querschnitt vorzugsweise U-förmig ausgebildet, wobei der als Stahldraht ausgebildete Bürstenkern 54 zwischen den beiden Schenkeln des Bürstenkörpers 52 verläuft. Um den Bürstenkern 54 sind eine Vielzahl von Borsten 51 angeordnet, die zwischen den Schenkeln des Bürstenkörpers 52 aus diesem heraustreten.

Wie in der Figur 11 zu erkennen ist, sind die Hohlräume zwischen den einzelnen Borsten 51 mit einer Gummimasse 53 ausgefüllt. Die Gummimasse 53 besteht aus einem Zwei-Komponenten-Verschleißgummi. Es ist ferner zu erkennen, daß die Borsten 51 von einem Gummimantel 55 umgeben sind, der ebenfalls aus dem zuvor genannten Zwei-Komponenten-Verschleißgummi besteht.

Die Gummimasse 53 und der Gummimantel 55 reichen bis in den Bürstenkörper 52 und schließen auch den Bürstenkern 54 ein.

Die Gummimasse 53 und der Gummimantel 55 wirken einerseits im ausgehärteten Zustand als elastische aber feste Verbindung der einzelnen Borsten 51 mit dem Bürstenkörper 52 und dem Bürstenkern 54. Andererseits stellen die Gummimasse 53 und der Gummimantel 55 ein elastisches Stützkorsett für die Borsten 51 außerhalb des Bürstenkörpers 52 dar. Bei der Reinigung der Siebfläche 15,115,215,315 und der Siebvorrichtung 19,119,219,319 verschleißen die Gummimasse 53 und der Gummimantel 55 gleichmäßig mit den Borsten. Durch die konstruktive Ausgestaltung der neuen Bürste gemäß Figur 11 wird jedoch die Lebensdauer der Borsten 51 wesentlich verlängert, da ein Abbrechen der Borsten 51 durch häufiges hin- und herbiegen durch die Gummimasse 53 und den Gummimantel 55 verhindert wird. Da die Borsten härter sind als die Gummimasse 53 und der Gummimantel 55 erfüllen sie dennoch ihre Aufgabe, die Löcher freizustechen. Die innerhalb des Bürstenkörpers 52 in der Gummimasse 53 und dem Gummimantel 55 eingebetteten Borsten 51 sind durch die Gummimasse 53 und den Gummimantel 55 fest miteinander verbunden und können dadurch nicht mehr einzeln aus dem Bürstenkörper 52 herausgezogen werden.

## Patentansprüche

1. Vorrichtung zum Austragen von festen Bestandteilen aus einer in einem Gerinne (1; 101; 201; 301) fließenden Flüssigkeit, mit einem als Förderrinne ausgebildeten Fördermittel ( 3; 103; 203; 303), welches unter einem Winkel < 90° zum Gerinne geneigt angeordnet ist und eine drehend angetriebene Förderschnecke oder Förderwendel (6; 106; 206; 306) hat, wobei das Fördermittel an einem Ende einen Feststoffaustrag (9; 309) und am gegenüberliegenden Ende eine zumindest in Teilflächen angeordnete Siebfläche (15; 115; 215; 315) aufweist, in der die festen Bestandteile aus der Flüssigkeit heraussiebbar und über die Förderschnecke oder die Förderwendel in Achsrichtung des Fördermittels zum Feststoffaustrag hin austragbar sind,
**dadurch gekennzeichnet,**
daß das Fördermittel (3; 103; 203; 303) zwischen dem Feststoffaustrag (9, 309) und der förderwegs eingangsseitig angeordneten Siebfläche (15; 115; 215; 315) eine Siebvorrichtung (19; 119; 219; 319) aufweist, deren auf das Fördermittel (3; 103; 203; 303) projizierte Siebfläche größer ist als der Durchmesser der Förderrinne (4; 104; 204; 304), wobei die Siebvorrichtung (19; 119; 219; 319) in Höhe des maximalen Flüssigkeitsspiegels im Gerinne (1; 101; 201; 301) angeordnet ist und abgesiebte feste Bestandteile oberhalb des maximalen Flüssigkeitsspiegels in das Fördermittel (3; 103; 203; 303) austrägt, und daß das Gerinne (1; 101; 201; 301) im Bereich der Siebvorrichtung (19; 119; 219; 319) entsprechend erweitert ausgebildet ist und sich die Siebvorrichtung (19; 119; 219; 319) über die gesamte Breite des Gerinnes (1; 101; 201; 301) erstreckt.

2. Vorrichtung nach Anspruch 1, dadurch gekennzeichnet, daß die Siebvorrichtung (19; 119; 219; 319) eine Austragseinrichtung (27; 127; 227; 327) aufweist, die die auf der weiteren Siebvorrichtung (19; 119; 219; 319) abgesiebten festen Bestandteile in einen oberhalb des maximalen Flüssigkeitsstandes angeordneten Trichter (30; 130; 230; 330) fördert, der die weitere Siebvorrichtung (19; 119; 219; 319) mit dem Fördermittel (3; 103; 203; 303) verbindet.

3. Vorrichtung nach Anspruch 1 oder 2, dadurch gekennzeichnet, daß die Siebvorrichtung (19; 119; 219; 319) mit einem größeren Teil ihres Volumens unterhalb des maximalen Flüssigkeitstandes angeordnet ist.

4. Vorrichtung nach Anspruch 3, dadurch gekennzeichnet, daß zweidrittel der Siebvorrichtung (19; 119; 219; 319) unterhalb des maximalen Flüssigkeitstandes angeordnet sind.

5. Vorrichtung nach einem der Ansprüche 1 bis 4, dadurch gekennzeichnet, daß die Förderschnecke oder Förderwendel (6; 106; 206; 306) im Bereich des Gerinnes (1; 101; 201; 301) in einer Förderrinne (4; 104; 204; 304) angeordnet ist, deren Mantelfläche aus einer im Querschnitt halbkreisförmig ausgebildeten Siebplatte (15; 115; 215; 315) besteht.

6. Vorrichtung nach einem der Ansprüche 1 bis 5, dadurch gekennzeichnet, daß an der Förderwendel (6; 106; 206; 306) bzw. an der Förderschnecke außenseitig eine Bürste (50) angeordnet ist, die aus einem Bürstenkörper (52) und einer Vielzahl in dem Bürstenkörper (52) gehaltenen Borsten (51) besteht, wobei die Bürste mit der Förderwendel (6; 106; 206; 306) bzw. der Förderschnecke umläuft und auf der Siebplatte (15; 115; 215; 315) aufliegt.

7. Vorrichtung nach Anspruch 6, dadurch gekennzeichnet, daß die Zwischenräume zwischen den Borsten (51) mit einer Gummimasse (53) ausgefüllt ist.

8. Vorrichtung nach Anspruch 6 oder 7, dadurch gekennzeichnet, daß die Borsten (51) und/oder die Gummimasse (53) in einem Gummimantel (55) angeordnet sind.

9. Vorrichtung nach Anspruch 7 oder 8, dadurch gekennzeichnet, daß die Gummimasse (53) und/oder der Gummimantel (55) aus einem mit den Borsten (51) verschleißenden Zwei-Komponenten-Gummi besteht.

10. Vorrichtung nach einem der Ansprüche 1 bis 9, dadurch gekennzeichnet, daß die Siebvorrichtung (19; 119; 219; 319) eine Siebplatte (22; 122; 222; 322) und eine als Rechen (28; 128; 228; 328) oder dergleichen ausgebildete Austragseinrichtung (27; 127; 227; 327) aufweist, die angetrieben ist und die auf der Siebplatte (22; 122; 222; 322) abgelagerte feste Bestandteile in den Trichter (30; 130; 230; 330) fördert.

11. Vorrichtung nach Anspruch 10, dadurch gekennzeichnet, daß die Siebplatte (22) kreisförmig ausgebildet ist und der Rechen (28) oder dergleichen um die Mittelachse der Siebplatte (22) drehend angetrieben ist.

12. Vorrichtung nach Anspruch 10, dadurch gekennzeichnet, daß die Siebplatte (122; 222) rechteckförmig ausgebildet ist und daß der Rechen (128; 228) oder dergleichen entlang einer parallel zu einer Kante der Siebplatte (122; 222) verlaufenden Führung (135; 235) bewegbar ist.

13. Vorrichtung nach Anspruch 12, dadurch gekennzeichnet, daß die Führung (135) parallel zur Achssrichtung der Förderrinne (104) verläuft.

14. Vorrichtung nach Anspruch 12, dadurch gekennzeichnet, daß die Führung (235) im rechten Winkel zur Achsrichtung der Förderrinne (204) verläuft.

15. Vorrichtung nach einem der Ansprüche 12 bis 14, dadurch gekennzeichnet, daß die Führung (135;, 235) als Umlaufschiene ausgebildet ist.

16. Vorrichtung nach Anspruch 13 oder 14, dadurch gekennzeichnet, daß beidseitig der Förderrinne (104; 204) eine Führung (135; 235) angeordnet ist, an der jeweils ein Rechen (128; 228) oder dergleichen bewegbar geführt ist.

17. Vorrichtung nach Anspruch 16, dadurch gekennzeichnet, daß beidseitig der Förderrinne (104) eine Trichterrinne (136) angeordnet ist, in die die festen Bestandteile von den parallel zur Förderrinne (104) geführten Rechen (128) oder dergleichen geschoben werden, von wo aus die festen Bestandteile in den Trichter (130) gelangen.

18. Vorrichtung nach Anspruch 16, dadurch gekennzeichnet, daß oberhalb der Trichterrinnen (136) eine Bedüsungsvorrichtung (137) angeordnet ist.

19. Vorrichtung nach Anspruch 16, dadurch gekennzeichnet, daß die Siebplatte (222) zweiteilig ausgebildet ist und die Hälften beidseitig der Förderrinne (204) angeordnet sind und daß die Hälften der Siebplatte (222) unter einem Winkel zum Trichter (230) angestellt sind, so daß die festen Bestandteile entgegen der Schwerkraft gefördert werden.

20. Vorrichtung nach einem der Ansprüche 1 bis 9, dadurch gekennzeichnet, daß die Siebvorrichtung (319) als drehend angetriebenes Trommelsieb (338) ausgebildet ist, in dessen Mittelachse die Förderrinne (304) angeordnet ist.

21. Vorrichtung nach Anspruch 20, dadurch gekennzeichnet, daß das Trommelsieb (338) im Bereich einer Stirnseite einen Antriebszahnkranz (340) aufweist, der mit einem von einem Motor (326) angetriebenen Antriebsritzel (339) kämmt.

22. Vorrichtung nach Anspruch 20, dadurch gekennzeichnet, daß im Trommelsieb (338) zumindest zwei diametral gegenüberliegende Mitnehmerleisten (342) angeordnet sind.

23. Vorrichtung nach Anspruch 20, dadurch gekennzeichnet, daß parallel zur Achsrichtung des Trommelsiebes (338) eine Bedüsungsvorrichtung (337) oberhalb des Trommelsiebes (338) angeordnet ist.

24. Vorrichtung nach Anspruch 23, dadurch gekennzeichnet, daß die Bedüsungsvorrichtung (337) dem Trichter (330) gegenüberliegend angeordnet ist.

25. Vorrichtung nach einem der Ansprüche 3 bis 24, dadurch gekennzeichnet, daß die Austragseinrichtung (27; 127; 227; 327) in Abhängigkeit der Menge des Flüssigkeitanfalls steuerbar ist.

## Claims

1. Apparatus for discharging solid matter from a fluid flowing along a gutter (1; 101; 201; 301), having a conveying means (3; 103; 203; 303) in the form of a conveying channel which is inclined at an angle of less than 90° to the gutter and has a rotationally driven conveyor worm or spiral (6; 106; 206; 306), the conveying means having a solids outlet (9; 309) at one end and a screening surface (15; 115; 215; 315) provided at least in some areas, at the opposite end, in which the solid matter can be screened out of the liquid and discharged towards the solids outlet by means of the conveyor worm or spiral in the axial direction of the conveying means, characterised in that the conveying means (3; 103; 203; 303) comprises, between the solids outlet (9; 309) and the screening surface (15; 115; 215; 315) arranged at the inlet end of the conveying path, a screening device (19; 119; 219; 319) the screening surface of which, projected onto the conveying means (3; 103; 203; 303), is larger than the diameter of the conveying channel (4; 104; 204; 304), the screening device (19; 119; 219; 319) being arranged at the same height as the maximum fluid level in the gutter (1; 101; 201; 301) and discharging screened-out solid ingredients above the maximum fluid level into the conveying means (3; 103; 203; 303), and the gutter (1; 101; 201; 301) being correspondingly widened in the region of the screening device (19; 119; 219; 319) and the screening device (19; 119; 219; 319) extending over the full width of the gutter (1; 101; 201; 301).

2. Apparatus according to claim 1, characterised in that the screening device (19; 119; 219; 319) has a discharge device (27; 127; 227; 327) which conveys the solid matter screened off by the further screening device (19; 119; 219; 319) into a funnel (30; 130; 230; 330) arranged above the maximum fluid level, this funnel connecting the further screening device (19; 119; 219; 319) to the conveying means (3; 103; 203; 303).

3. Apparatus according to claim 1 or 2, characterised in that the screening device (19; 119; 219; 319) is arranged with the greater part of its volume below the maximum fluid level.

4. Apparatus according to claim 3, characterised in that two-thirds of the screening device (19; 119; 219; 319) are arranged below the maximum fluid level.

5. Apparatus according to one of claims 1 to 4, characterised in that the conveyor worm or spiral (6; 106; 206; 306) is arranged in the region of the gutter (1; 101; 201; 301) in a conveying channel (4; 104; 204; 304), the outer surface of which consists of a perforated plate (15; 115; 215; 315) of semicircular cross section.

6. Apparatus according to one of claims 1 to 5, characterised in that on the outside of the conveyor spiral (6; 106; 206; 306) or conveyor worm is provided a brush (50) consisting of a brush body (52) and a plurality of bristles (51) held in the brush body (52), the brush rotating with the conveyor spiral (6; 106; 206; 306) or conveyor worm and resting on the perforated plate (15; 115; 215; 315).

7. Apparatus according to claim 6, characterised in that the spaces between the bristles (51) are filled with a rubber mass (53).

8. Apparatus according to claim 6 or 7, characterised in that the bristles (51) and/or the rubber mass (53) are mounted in a rubber casing (55).

9. Apparatus according to claim 7 or 8, characterised in that the rubber mass (53) and/or the rubber casing (55) consists of a two-component rubber enclosing the bristles (51).

10. Apparatus according to one of claims 1 to 9, characterised in that the screening device (19; 119; 219; 319) has a perforated plate (22; 122; 222; 322) and a discharge device (27; 127; 227; 327) constructed as a rake (287; 128; 228; 328) or the like which is driven and conveys the solid matter deposited on the perforated plate (22; 122; 222; 322) into the funnel (30; 130; 230; 330).

11. Apparatus according to claim 10, characterised in that the perforated plate (22) is circular in shape and the rake (28) or the like is rotationally driven about the central axis of the perforated plate (22).

12. Apparatus according to claim 10, characterised in that the perforated plate (122; 222) is rectangular in shape and the rake (128; 228) or the like is movable along a guide (135; 235) running parallel to one edge of the perforated plate (122; 222).

13. Apparatus according to claim 12, characterised in that the guide (135) runs parallel to the axial direction of the conveying channel (104).

14. Apparatus according to claim 12, characterised in that the guide (235) runs at right angles to the axial direction of the conveying channel (204).

15. Apparatus according to one of claims 12 to 14, characterised in that the guide (135; 235) is constructed as an encircling rail.

16. Apparatus according to claim 13 or 14, characterised in that on both sides of the conveying channel (104; 204) is provided a guide (135; 235) on which a rake (128;228) or the like is movably guided.

17. Apparatus according to claim 16, characterised in that on both sides of the conveying channel (104; 204) is provided a funnelling channel (136) into which the solid matter is pushed by the rakes (128) or the like guided parallel to the conveying channel (104), and from where the solid matter passes into the funnel (130).

18. Apparatus according to claim 16, characterised in that a jet spray apparatus (137) is arranged above the funnelling channels (136).

19. Apparatus according to claim 16, characterised in that the perforated plate (222) is made in two parts and the halves are arranged on either side of the conveying channel (204) and the halves of the perforated plate (22) are set at an angle to the funnel (230) such that the solid matter is conveyed counter to gravity.

20. Apparatus according to one of claims 1 to 9, characterised in that the screening device (319) is constructed as a rotationally driven perforated drum (338) along the central axis of which the conveying channel (304) is provided.

21. Apparatus according to claim 20, characterised in that in the region of one end face the perforated drum (338) has a driving gear crown (340), meshing with a drive pinion (339) driven by a motor (326).

22. Apparatus according to claim 20, characterised in that at least two diametrically opposite follower strips (342) are provided in the perforated drum (338).

23. Apparatus according to claim 20, characterised in that a jet spray apparatus (337) is mounted above the perforated drum (338), parallel to the axial direction of said drum (338).

24. Apparatus according to claim 23, characterised in that the jet spray apparatus (337) is mounted opposite the funnel (330).

25. Apparatus according to one of claims 3 to 24, characterised in that the discharge device (27; 127; 227; 327) can be controlled as a function of the quantity of fluid present.

## Revendications

1. Dispositif pour extraire des composants solides d'un fluide s'écoulant dans une rigole (1, 101, 201, 301) avec un moyen de transport en forme de goulotte de transport (3, 103, 203, 303) qui est inclinée d'un angle < 90° par rapport à la rigole et à une vis convoyeuse ou une hélice convoyeuse entraînée en rotation (6, 106, 206, 306), où le moyen de transport présente à une extrémité une sortie de solide (9, 309) et à l'autre extrémité une surface de tamisage (15, 115, 215, 315) disposée au moins en surfaces partielles, où on peut extraire par tamisage du liquide les composants solides et les convoyer vers la sortie de solide via la vis convoyeuse ou l'hélice convoyeuse,
caractérisé en ce que
le moyen de transport (3, 103, 203, 303) présente entre la sortie de solide (30, 309) et la surface de tamisage (15, 115, 215, 315) disposée du côté de l'entrée sur le trajet du convoyage un dispositif de tamisage (19, 119, 219, 319) dont la surface de tamisage projetée sur le moyen de transport (3, 103, 203, 303) est supérieure au diamètre de la goulotte de transport (4, 104, 204, 304) où le dispositif de tamisage (19, 119, 219, 319) est placé à la hauteur du niveau maximal de liquide dans la rigole (1, 101, 201, 301) et il entraîne les composants solides retenus par tamisage au-dessus du niveau maximal de liquide dans le moyen de transport (3, 103, 203, 303) et que la rigole (1, 101, 201, 301) est élargie dans le domaine du dispositif de tamisage (19, 119, 219, 319) s'étend sur toute la largeur de la rigole (1, 101, 201, 301).

2. Dispositif selon la revendication 1,
caractérisé en ce que
le dispositif de tamisage (19, 119, 219, 319) présente un dispositif d'extraction (27, 127, 227, 327) qui convoie les composants solides tamisés sur l'autre dispositif de tamisage (19, 119, 219, 319) dans une trémie placée au-dessus du niveau maximal de liquide (30, 130, 230,330) qui relie l'autre dispositif de tamisage (19, 119, 219, 319) au moyen de transport (3, 103, 203, 303).

3. Dispositif selon la revendication 1 ou 2,
caractérisé en ce que
le dispositif de tamisage (19, 119, 219, 319) est placé avec une grande partie de son volume en dessous du niveau maximal de liquide.

4. Dispositif selon la revendication 3,
caractérisé en ce que
les deux tiers du dispositif de tamisage (19, 119, 219, 319) sont placés en dessous du niveau maximal du liquide.

5. Dispositif selon l'une des revendications 1 à 4,
caractérisé en ce que
la vis convoyeuse ou l'hélice convoyeuse (6, 106, 206, 306) sont placés dans le domaine de la rigole (1, 101, 201, 301) dans une goulotte de transport (4, 104, 204, 304), dont la surface d'enveloppe est constituée d'une plaque de tamis en forme de demi-cercle en section (15, 115, 215, 315)

6. Dispositif selon l'une des revendications 1 à 5,
caractérisé en ce que
l'hélice convoyeuse (6, 106, 206, 306) ou la vis convoyeuse comporte à l'extérieur une brosse (50) qui est constituée d'un corps de brosse (52) et d'un grand nombre de crins (51) maintenus dans le corps de brosse (52) où la brosse tourne avec l'hélice convoyeuse (6, 106, 206, 306) ou avec la vis convoyeuse et repose sur la plaque de tamis (15, 115, 215, 315).

7. Dispositif selon la revendication 6,
caractérisé en ce que
les intervalles entre les crins (51) sont remplis d'une masse de caoutchouc (53).

8. Dispositif selon la revendication 6 ou 7,
caractérisé en ce que
les crins (51) et/ou la masse de caoutchouc (53) sont disposés dans une enveloppe de caoutchouc (55).

9. Dispositif selon la revendication 7 ou 8,
caractérisé en ce que
la masse de caoutchouc (53) et/ou l'enveloppe de caoutchouc (55) est constituée d'un caoutchouc bicomposant s'usant avec les crins (51).

10. Dispositif selon l'une des revendications 1 à 9,
caractérisé en ce que
le dispositif de tamisage (19, 119, 219, 319) présente une plaque de tamisage (22, 122, 222, 322) et un dispositif d'extraction (27, 127, 227, 327) en forme de râteau (28, 128, 228, 328) ou analogue, qui est entraîné et qui convoie les composants solides déposés sur la plaque de tamis (22, 122, 222, 322) dans la trémie (30, 130, 23, 330).

11. Dispositif selon la revendication 10,
caractérisé en ce que
la plaque de tamis (22) est de forme circulaire et que le râteau ou analogue (28) est entraîné en rotation autour de l'axe médian de la plaque de tamis (22).

12. Dispositif selon la revendication 10,
caractérisé en ce que
la plaque de tamis (122, 222) est rectangulaire et que le râteau (128, 228) ou analogue est mobile le long d'un guidage (135, 235) qui s'étend parallèlement à un bord de la plaque de tamis (122, 222).

13. Dispositif selon la revendication 12,
caractérisé en ce que
le guidage (135) s'étend parallèlement au sens de l'axe de la goulotte de transport (104).

14. Dispositif selon la revendication 12,
caractérisé en ce que
le guidage (235) s'étend perpendiculairement au sens de l'axe de la goulotte de transport (204).

15. Dispositif selon l'une des revendications 12 à 14,
caractérisé en ce que
le guidage (135, 235) est en forme de rail de circulation.

16. Dispositif selon la revendication 13 ou 14,
caractérisé en ce que
de chaque côté de l a goulotte de transport (104, 204) se trouve un guidage (135, 235) sur lequel est guidé en déplacement respectivement un râteau (128, 228) ou analogue.

17. Dispositif selon la revendication 16,
caractérisé en ce que
de chaque côté de la goulotte de transport (104) se trouve une goulotte de trémie (136) où sont poussés les composants solides par les râteaux (128) ou analogues guidés parallèlement à la goulotte de transport (104) d'où les composants solides parviennent dans la trémie (130).

18. Dispositif selon la revendication 16,
caractérisé en ce qu'
au-dessus des goulottes de trémie (136) se trouve un dispositif de pulvérisation (137).

19. Dispositif selon la revendication 16,
caractérisé en ce que
la plaque de tamis (222) est en deux parties et que les deux moitiés se trouvent de part et d'autre de la goulotte de transport (204) et que les moitiés de la plaque de tamis (222) font un angle avec la trémie (230), de sorte que les composants solides sont convoyés en opposition à la gravité.

20. Dispositif selon l'une des revendications 1 à 9,
caractérisé en ce que
le dispositif de tamisage est en forme de tamis à tambour (338) entraîné en rotation, dans l'axe médian duquel se trouve la goulotte de transport (304).

21. Dispositif selon la revendication 20,
caractérisé en ce que
le tamis à tambour (338) présente une couronne dentée d'entraînement (340) dans la zone d'une face frontale qui engrène un pignon d'entrée (339) entraîné par un moteur (326).

22. Dispositif selon la revendication 20,
caractérisé en ce que
dans le tamis à tambour (338) se trouvent au moins deux pattes d'entraînement (342) en positions diamétralement opposées.

23. Dispositif selon la revendication 20,
caractérisé en ce que
parallèlement au sens de l'axe du tamis à tambour (338) se trouve un dispositif de pulvérisation (337) au-dessus du tamis à tambour (338).

24. Dispositif selon la revendication 23,
caractérisé en ce que
le dispositif de pulvérisation (337) se trouve en face de la trémie (330).

25. Dispositif selon l'une des revendications 3 à 24,
caractérisé en ce qu'
on peut commander le dispositif d'extraction (27, 127, 227, 327) en fonction de la quantité de liquide qui arrive.
